# EUROPÄISCHE PATENTANMELDUNG

(11) **EP 2 072 685 A1**
(43) Veröffentlichungstag der Anmeldung: **24.06.2009**
(21) Anmeldenummer: 08000246.2
(22) Anmeldetag: 09.01.2008
(51) Int. Cl.: E02B 17/00, F03D 1/00

(54) **Gründungsstruktur für Offshore-Bauwerke, insbesondere für Offshore-Windenergieanlagen, und Verfahren zur Herstellung derselben**

(30) Priorität: 18.12.2007 EP 07024501
(71) Anmelder: WeserWind GmbH, 27572 Bremerhaven (DE)
(72) Erfinder: Siems, Michael Dr.-Ing., 31224 Peine (DE); Scharff, Rüdiger Dr.-Ing., 38102 Braunschweig (DE)
(74) Vertreter: Möller, Friedrich

(57) **Zusammenfassung**

Für Offshore-Bauwerke, wie z. B. Offshore-Windenergieanlagen, werden üblicherweise Gründungsstrukturen verwendet, die sich überwiegend unter Wasser befinden und am Meeresboden verankert sind. Auf dieser Gründungsstruktur ist der Turm des eigentlichen Offshore-Bauwerks, wie beispielsweise der Turm der Windenergieanlage befestigt. Zum Herstellen der Verbindung zwischen der eigentlichen der Tragstruktur (11) der Gründungsstruktur und dem Turm weist die Gründungsstruktur ein sogenanntes Übergangsstück (10) auf.

Die Erfindung sieht es vor, dass das Übergangsstück (10) aus mehreren Übergangsstückteilen (27) zusammengesetzt wird, die miteinander durch vertikale Schweißnähte (28) verbunden werden. Die ausschließlich in vertikalen Ebenen liegenden Schweißnähte (28) bieten den Vorteil, dass sie deutlich geringeren Belastungen ausgesetzt sind als horizontal verlaufende Schweißnähte (28). Darüber hinaus lässt sich das Übergangsstück (10) einfach an der Baustelle aus den Übergangsstückteilen (27) zusammenschweißen.

## Beschreibung

Die Erfindung betrifft ein Verfahren zur Herstellung einer Gründungsstruktur für Offshore-Bauwerke, insbesondere für Offshore-Windenergieanlagen, gemäß dem Oberbegriff des Anspruchs 1. Außerdem betrifft die Erfindung eine Gründungsstruktur für Offshore-Bauwerke, insbesondere für Offshore-Windenergieanlagen, gemäß dem Oberbegriff des Anspruchs 5.

Gründungsstrukturen der hier angesprochenen Art werden für Offshore-Bauwerke verwendet. Diese Gründungsstrukturen befinden sich zumindest überwiegend unter Wasser und stellen quasi das Fundament der Offshore-Bauwerke, insbesondere Offshore-Windenergieanlagen, dar. Die Tragstruktur der Gründungsstruktur kann beispielsweise mit mehreren Beinen in Form von Säulen, ebenso wie als dreidimensionale Gitterstruktur bzw. als Rahmentragwerk ausgebildet sein.

Das Offshore-Bauwerk, insbesondere die Offshore-Windenergieanlage, das bzw. die von der Gründungsstruktur getragen wird, weist üblicherweise einen Turm auf, der mit der Gründungsstruktur verbunden wird. Zum Herstellen der Verbindung des Offshore-Bauwerks mit der Tragstruktur, die üblicherweise mehrere Säulen aufweist, ist ein sogenanntes Übergangsstück als Bestandteil der Gründungsstruktur mit dem oberen Endbereich der Tragstruktur verbunden. Solche Übergangsstücke weisen eine komplizierte Geometrie auf, da ein Übergang von einem zentral angeordneten Turm auf die einzelnen Säulen der Tragstruktur geschaffen werden muss. Dementsprechend werden solche Übergangsstücke üblicherweise in komplizierten Fügeverfahren aus zahlreichen Einzelteilen mit etlichen unterschiedlich verlaufenden Schweißnähten hergestellt. Die Vielzahl von Schweißnähten und insbesondere die stärker belasteten horizontal verlaufenden Schweißnähte stellen Schwachstellen dar, die die Beanspruchbarkeit des Übergangsstücks begrenzen. Des Weiteren werden Übergangsstücke im Regelfall jeweils als komplett montierte Einheit hergestellt, die aufgrund ihrer Größe nur unter großem Aufwand an ihren Einsatzort transportierbar sind.

Der Erfindung liegt die Aufgabe zugrunde, ein Verfahren zur Herstellung einer ein Übergangsstück aufweisenden Gründungsstruktur für Offshore-Bauwerke und eine Gründungsstruktur mit einem Übergangsstück zu schaffen, wobei das Übergangsstück einfacher herstellbar, hochbelastbar und leichter transportierbar ist.

Ein Verfahren zur Lösung dieser Aufgabe weist die Maßnahmen des Anspruchs 1 auf. Demnach wird das Übergangsstück aus mehreren Übergangsstückteilen gebildet, wobei die Übergangsstückteile miteinander durch Schweißnähte verschweißt werden, die im Wesentlichen nur in senkrechten oder in nahezu senkrechten Ebenen liegen. Kleinere Winkelabweichungen von der senkrechten Anordnung der Ebenen sind möglich, so dass auch in leicht gegenüber der Längsmittelachse der Gründungsstruktur verkippten Ebenen verlaufende Schweißnähte möglich sind. Die Schweißnähte können aus mehreren über- und/oder nebeneinander liegenden Schweißraupen gebildet werden. Die Schweißnähte verlaufen entlang der in vertikalen Ebenen liegenden Fügestellen jeweils benachbarter Übergangsstückteile. Bei den Schweißnähten handelt es sich bevorzugt um gradlinige Schweißnähte, die maschinell hergestellt werden können, weil sie im Wesentlichen nur zweidimensional sind.

Insbesondere wird das Übergangsstück aus mehreren gleichen Übergangsstückteilen gebildet. Dadurch, dass das Übergangsstück aus mehreren im Wesentlichen identischen Teilen, den Übergangsstückteilen, zusammengesetzt wird, ergibt sich in der Draufsicht automatisch eine symmetrische Struktur des Übergangsstücks. Darüber hinaus wird die Fertigung dadurch vereinfacht, dass lediglich eine einzelne Komponente, das Übergangsstückteil, mehrfach hergestellt wird. Aus mehreren dieser Übergangsstückteile lässt sich dann leicht das Übergangsstück zusammenschweißen.

Das Übergangsstück wird vorzugsweise hohl ausgebildet, das heißt, aus den Übergangsstückteilen wird insbesondere die äußere Wandung des hohlen Übergangsstücks zusammengesetzt.

Bevorzugt wird jedes Übergangsstückteil mit einer Säule der Tragstruktur verbunden. Die Verbindung zwischen dem Übergangsstückteil und der Säule der Tragstruktur wird dabei insbesondere mit Hilfe eines Übergangsknotens hergestellt. Durch die Zuordnung und Verbindung jedes Übergangsstückteils mit einer Säule der Tragstruktur wird eine optimale Krafteinleitung von dem Übergangsstück in die Säulen der Tragstruktur ermöglicht. Abhängig vom Aufbau der Tragstruktur wird die Anzahl der Übergangsstückteile der Anzahl der Säulen angepasst, sodass beispielsweise bei einer Gitterstruktur mit vier Säulen für das Übergangsstück ebenfalls vier Übergangsstückteile verwendet werden, also für jede Säule ein Übergangsstückteil vorgesehen ist. Durch die Verwendung von Übergangsknoten zum Herstellen der Verbindung zwischen dem Übergangsstück und den Säulen der Tragstruktur kann einer unterschiedlichen Geometrie der Verbindungsstellen, wie beispielsweise runden Säulen und eckigen, insbesondere rechteckigen oder quadratischen Fügestellen des Übergangsstücks, Rechnung getragen werden, indem ein Übergang mit einer Anpassung des Querschnitts zwischen diesen geschaffen wird.

Bevorzugt werden Stirnflächen an den Übergangsstückteilen mit korrespondierenden Fügeflächen der Übergangsknoten verschweißt, indem passend zueinander gefertigte Stirnflächen des Übergangsstücks mit korrespondierenden Fügeflächen der Übergangsknoten verbunden werden. Diese Verbindungen können einfach durch Schweißen hergestellt werden.

Beim Einsatz der Übergangsknoten beispielsweise in einer Gitterstruktur weisen die Übergangsknoten vorzugsweise zusätzlich zu den genannten Fügeflächen noch weitere Fügeflächen an seitlichen Abgängen auf. An diesen Fügeflächen werden beispielsweise Streben zum Verstreben der Gitterstruktur befestigt. Weiterhin ist aber auch eine Ausbildung der Übergangsknotenteile ohne diese seitlichen Abgänge für die Verstrebungen möglich. Dies ist insbesondere dann der Fall, wenn keine Verstrebungen der Tragstruktur notwendig sind.

Eine Gründungsstruktur zur Lösung der Eingangs genannten Aufgabe weist die Merkmale des Anspruchs 5 auf. Demnach ist das Übergangsstück aus mehreren Übergangsstückteilen gebildet und die Übergangsstückteile sind miteinander durch Schweißnähte verbunden, die im Wesentlichen nur in senkrechten oder nahezu senkrechten Ebenen liegen. Die senkrechten bzw. vertikalen Ebenen zeichnen sich vorzugsweise dadurch aus, dass sie sich in einer auf der Längsmittelachse der Tragstruktur liegenden Längsmittelachse des Übergangsstückes schneiden. Indem das Übergangsstück aus mehreren Teilen, den sogenannten Übergangsstückteilen, zusammengesetzt ist, lässt sich die Zahl der Schweißnähte insgesamt deutlich reduzieren, sodass dementsprechend weniger potentielle Schwachstellen vorhanden sind. Vertikale Schweißnähte werden außerdem weniger beansprucht als horizontale Schweißnähte, sodass sich vertikale Schweißnähte besonders eignen, um ein stark belastetes tragendes Teil, wie ein Übergangsstück, zusammenzuschweißen.

Das Übergangsstück wird gemäß einer bevorzugten Ausgestaltung der Erfindung aus mehreren gleichen Übergangsstückteilen gebildet. Die Verwendung sich gleichender Übergangsstückteile ermöglicht eine vereinfachte Herstellung, da die Fertigung mehrerer kleinerer und identischer Übergangsstückteile, aus denen das Übergangsstück zusammengesetzt wird, einen deutlich geringeren Aufwand erfordert als die Herstellung des gesamten Übergangsstückes. Indem sich gleichende Übergangsstückteile verwendet werden, kann vorzugsweise auch gleich ein symmetrischer Aufbau des Übergangsstücks erreicht werden. Beispielsweise sind die Übergangsstückteile dazu jeweils als Viertelschalen ausgebildet, sodass vier dieser Übergangsstückteile zu einem vollständigen Übergangsstück zusammengesetzt und verschweißt werden können. Die bevorzugte Ausbildung als Viertelschalen, die gewölbt sind, führt zu einer kuppelartigen Form des Übergangsstücks. Die Verwendung von vier Übergangsstückteilen ergibt dabei vorzugsweise eine kombinierte runde und quadratische Grundstruktur passend zu einer Tragstruktur mit quadratischer Querschnittsfläche und runden Türmen.

Vorzugsweise weist jedes Übergangsstückteil eine als Fügefläche nutzbare Stirnfläche auf, die insbesondere am unteren freien Ende eines beinartigen Ansatzes des Übergangsstückteils angeordnet ist. Durch die Anordnung der Stirnflächen am unteren freien Ende der beinartigen Ansätze der Übergangsstückteile sind diese als Fügeflächen zum Verschweißen gut zugänglich. Zur Material- und Gewichtsersparnis können die beinartigen Ansätze der Übergangsstückteile hohl ausgebildet sein.

Vorzugsweise ist jeweils ein Übergangsknoten zwischen jeder Säule und dem Übergangsstückteil, das der jeweiligen Säule zugeordnet ist, angeordnet. Der Übergangsknoten sorgt für eine stabile Verbindung und einen passgenauen Übergang zwischen der Säule und dem Übergangsstückteil. Bevorzugt ist der Übergangsknoten als Hohlkörper ausgebildet, um Material und Gewicht einzusparen.

Der Übergangsknoten weist mindestens zwei im Wesentlichen gegenüberliegende Fügeflächen auf, die vorzugsweise parallel zueinander angeordnet sind, und besonders bevorzugt axial übereinander angeordnet sind. Eine der Fügeflächen des Übergangsknotens ist mit einer Stirnfläche einer Säule verbindbar, während eine andere der Fügeflächen des Übergangsknotens mit der Stirnfläche eines beinartigen Ansatzes des jeweiligen Übergangsknotenteils verbindbar ist. Somit kann der Übergangsknoten zur Verbindung einer Säule mit einem jeweiligen Übergangsknotenteil dienen, indem die entsprechenden Fügeflächen passend zueinander ausgebildet werden. Durch parallel beziehungsweise axial beabstandete Anordnung der Fügeflächen zueinander kann eine besonders gute Krafteinleitung vom Übergangsstückteil in die Säule mit Hilfe des Übergangsknotens erreicht werden. Üblicherweise hat die Säule einen runden Querschnitt, sodass die zugeordnete Fügefläche des Übergangsknotens einen ebensolchen Querschnitt aufweist. Der beinartige Ansatz des Übergangsstückteils ist typischerweise rechteckig, quadratisch oder trapezförmig ausgebildet, sodass eine dieser Form entsprechende Fügefläche am Übergangsknoten vorgesehen ist. Somit schafft der Übergangsknoten einen Übergang zwischen verschiedenen Geometrien der Säulen und der beinartigen Ansätze des Übergangsstückes.

Insbesondere sind die Übergangsknoten aus einem schweißbaren Metall gegossen, wie beispielsweise aus Stahlguss. Aufgrund des Gießverfahrens lassen sich praktisch beliebige Formgebungen der Übergangsknoten erreichen, sodass eine gezielte Anpassung an die zu verbindenden Bauteile der Gründungsstruktur, also insbesondere die Säulen der Tragstruktur, ermöglicht wird. Die Übergangsstückteile zur Bildung des Übergangsstücks sind ebenfalls aus einem schweißbaren Metall hergestellt, insbesondere sind sie ebenfalls aus Stahl oder ähnlichem gegossen. Auch hier kann eine praktisch beliebige Formgebung erfolgen, was für eine materialsparende und auf Langlebigkeit und Belastbarkeit optimierte Ausbildung der Übergangsstückteile notwendig ist. Somit ist es insbesondere möglich, die Übergangsstückteile wie auch die Übergangsknoten jeweils für sich einstückig auszubilden. Damit entfallen in beiden Fällen alle unnötigen Schwachstellen, wie beispielsweise zusätzliche Schweißnähte, die nicht lediglich zum Zusammensetzen der Übergangsstückteile erzeugt werden müssen. Bei der Verwendung von beispielsweise vier Übergangsstückteilen müssen demnach lediglich vier vertikale Schweißnähte zum Zusammenbau des gesamten Übergangsstückes angebracht werden.

Alternativ kann auch jedes Übergangsstückteil aus mehreren Teilen gebildet sein, die vorzugsweise dann aber auch lediglich mit im Wesentlichen vertikal verlaufenden Schweißnähten verbunden werden. Beispielsweise werden die beinartigen Ansätze mit der Innen- bzw. Außenfläche des Übergangsstückteils verschweißt.

Die Fügeflächen des Übergangsknotens weisen bevorzugt jeweils mindestens eine Öffnung auf, die insbesondere dem hohlen Inneren des Übergangsknotens zugeordnet ist, so dass sich ein durchgehender Hohlraum im Übergangsknoten ergibt. Ebenso können auch die beinartigen Ansätze der Übergangsstückteile hohl ausgebildet sein. Dann weist auch jede Stirnfläche des beinartigen Ansatzes mindestens eine Öffnung auf. Die Fügeflächen der Übergangsknoten sind insbesondere so ausgebildet, dass sich eine mit der zugeordneten Säule bzw. dem Übergangsstückteil korrespondierende Querschnittsform ergibt, also beispielsweise eine ringförmige Fügefläche passend zum ringförmigen Querschnitt des Rohres einer Säule bzw. eine rechteckige rahmenähnliche Form der Fügefläche des Übergangsknotens passend zu der zugeordneten Stirnfläche des beinartigen Ansatzes des Übergangsstückteils.

Vorzugsweise ist das mit der Tragstruktur verbundene Übergangsstück mit einem Turm, beispielsweise dem Turm einer Offshore-Windenergieanlage, verbindbar. Dazu ist vorzugsweise den beinartigen Ansätzen der Übergangsstückteile gegenüber liegend eine beispielsweise runde Aufnahme für einen Turm vorgesehen, an die der Turm angeschweißt oder auch angeschraubt werden kann.

Im Folgenden wird ein bevorzugtes Ausführungsbeispiel der Erfindung anhand der Zeichnung näher erläutert. In der Zeichnung zeigen:

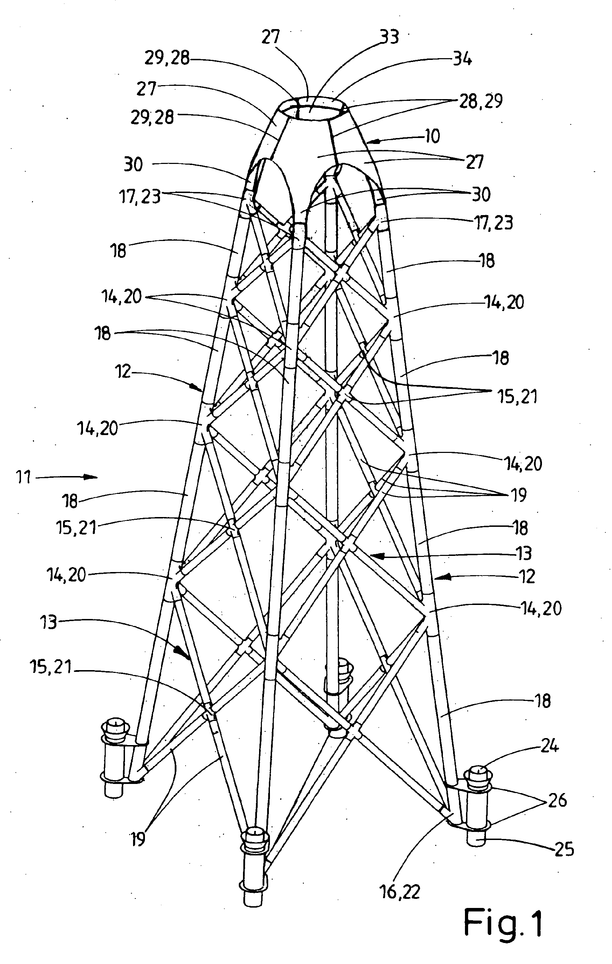

- Fig. 1: eine Gründungsstruktur mit einer gitterartigen Tragstruktur und einem Übergangsstück in einer perspektivischen Darstellung,

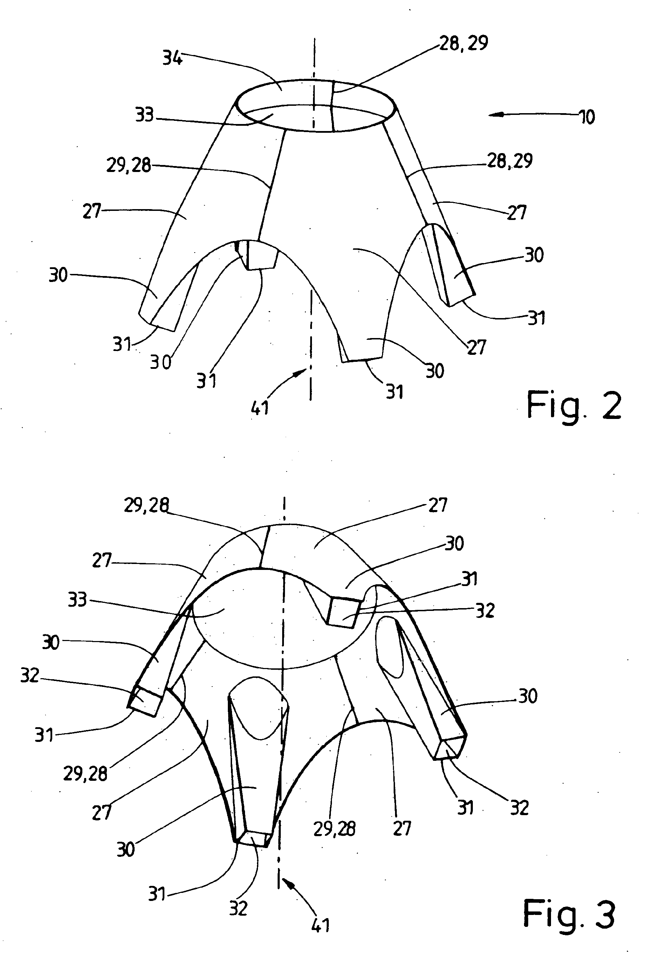

- Fig. 2: ein Übergangsstück in einer seitlichen, perspektivischen Darstellung,
- Fig. 3: ein Übergangsstück in einer perspektivischen Darstellung von unten, und

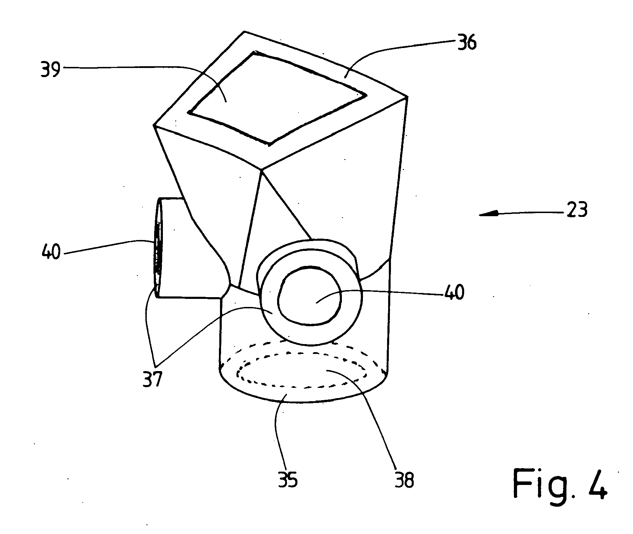

- Fig. 4: ein Übergangsknoten zum Verbinden des Übergangsstücks mit der Tragstruktur.

In den Figuren ist ein Ausführungsbeispiel einer Gründungsstruktur für Offshore-Bauwerke, wie einer Gründungsstruktur für Offshore-Windenergieanlagen, gezeigt. Die Gründungsstruktur weist eine Tragstruktur 11 und ein Übergangsstück 10 am oberen Ende der Tragstruktur 11 auf, wobei die Tragstruktur 11 in der gezeigten Ausführungsform der Erfindung als Gitterstruktur ausgebildet ist. Die Tragstruktur 11 kann aber auch beliebige andere Ausgestaltungen aufweisen. Das Übergangsstück 10 dient zur Herstellung der Verbindung zwischen der Tragstruktur 11 und einem nicht gezeigten Turm eines Offshore-Bauwerks, der oben auf das Übergangsstück 10 aufgesetzt und mit diesem dauerhaft verbunden wird. Die Tragstruktur 11 der Gründungsstruktur befindet sich im Wesentlichen unter Wasser. Üblicherweise ragt das Übergangsstück 10 aus dem Wasser heraus.

Die hier gezeigte gitterartige Tragstruktur 11 der Gründungsstruktur ist als dreidimensionales Rahmentragwerk ausgebildet. Dazu verfügt die Tragstruktur 11 über hochragende Säulen 12 und überwiegend diagonalgerichtete Streben 13. Die Streben 13 sind mit den vier Säulen 12 der hier gezeigten dreidimensionalen Tragstruktur 11 an Knotenpunkten 14, 15, 16 und 17 verbunden. Die Säulen 12 laufen im oberen Bereich der abgebildeten Tragstruktur 11 leicht konvergierend zusammen, so dass sich der Abstand der Säulen 12 ausgehend von den Knotenpunkten 16 an den unteren Enden der Säulen 12 zum oberen Übergangsstück 10 hin kontinuierlich verringert. Die Säulen 12 laufen aber am oberen Ende der Gitterstruktur 11 nicht vollständig zusammen, so dass sie unterhalb des Übergangsstücks 10 noch beabstandet sind. In jeder von zwei benachbarten Säulen 12 aufgespannten trapezförmigen Ebene sind die Streben 13 angeordnet. Im gezeigten Ausführungsbeispiel verlaufen die Streben 13 diagonal zwischen zwei übereinanderliegenden Knotenpunkten 14, 15, 16 bzw. 17 einerseits und zwei benachbarten Säulen 12 andererseits. Dadurch kreuzen sich die diagonalen Streben 13 in Knotenpunkten 15. Bei der hier gezeigten Tragstruktur 11 sind vier Etagen sich kreuzender Streben 13 und Knotenpunkte 15 übereinander angeordnet.

Die Säulen 12 und Streben 13 sind aus Rohren 18, 19 entsprechender Längen gebildet. Gegebenenfalls können die Säulen 12 und/oder Streben 13 auch aus massiven Stangen mit beliebigen Querschnitten gebildet sein. Die Rohre 18 der Säulen 12 weisen einen größeren Durchmesser auf als die Rohre 19 der Streben 13. Im Querschnitt sind die Rohre 18 und 19 der Säulen 12 und Streben 13 rund ausgebildet. Die Säulen 12 und/oder Streben 13 und damit entsprechend auch die Rohre 18, 19 können aber auch über andere Querschnitte, beispielsweise elliptische, ovale oder eckige Querschnitte, verfügen.

Die Enden der Streben 13 sind nicht unmittelbar mit den Säulen 12 verschweißt, sondern durch im Bereich der Knotenpunkte 14, 15, 16 vorgesehene Knotenteile 20, 21, 22 verbunden. An den Knotenpunkten 17 sind Übergangsknoten 23 vorgesehen, an die unten die oberen Enden der Säulen 12 und oben das Übergangsstück 10 angeschweißt sind.

Die Knotenteile 22 an den unteren Enden der Säulen 12 sind mit senkrechten Pfahlhülsen 25 für Gründungspfähle 24 verbunden. Die Pfahlhülsen 25 sind durch zwei voneinander beabstandete, vorzugsweise parallele, horizontale Platten 26 mit dem jeweiligen unteren Knotenteil 22 verbunden. Die Erfindung ist aber nicht auf diese Ausführungsform der Verankerung der Gründungsstruktur auf dem Meeresboden beschränkt, es können andere geeignete Verankerungen verwendet werden.

Erfindungsgemäß besteht das Übergangsstück 10 im Wesentlichen aus mehreren Übergangsstückteilen 27. Das in den Figuren gezeigte Übergangsstück 10 ist aus vier Übergangsstückteilen 27 zusammengesetzt, die sich gleichen. Dabei handelt es sich in diesem Fall im Wesentlichen um vier gewölbte Viertelschalen, die zusammengesetzt das abgebildete kuppelartige Übergangsstück 10 bilden. Diese Übergangsstückteile 27 werden nur mit in vertikalen bzw. nahezu vertikalen Ebenen verlaufenden Schweißnähten 28 zu dem Übergangsstück 10 zusammengeschweißt. Die Schweißnähte 28 verlaufen entlang seitlicher Fügestellen 29 der Übergangsstückteile 27, an denen jeweils zwei Übergangsstückteile 27 zusammengesetzt werden. Weiterhin verlaufen die Schweißnähte 28 im Wesentlichen vertikal in jeweils einer Ebene, d. h. zweidimensional. Um eine ausreichende Haltbarkeit der Schweißverbindung zu erreichen, können dabei mehrere Schweißraupen im Wesentlichen parallel zueinander und/oder übereinander liegend angeordnet werden, so dass ein Schweißspalt zwischen den Fügestellen 29 benachbarter Übergangsstückteile 27 zumindest größtenteils ausgefüllt wird. Insgesamt ist das Übergangsstückteil 27 mit den weiteren Übergangsstückteilen 27 zum Übergangstück 10 beispielsweise an der Baustelle unter Verwendung der zweidimensionalen Schweißnähte 28 zusammensetzbar, so dass die Einzelteile des Übergangsstückes 10, also die Übergangsstückteile 27, einfacher transportierbar sind. Die Schweißnähte 28 sind durch ihren geraden Verlauf besonders gut maschinell fertigbar.

Das Übergangsstück 10 weist in der gezeigten Ausführungsform vier Stützbeine 30 auf, die nach unten erstreckt sind. In den Bereichen zwischen den Stützbeinen 30 weist das Übergangsstück 10 weiterhin kreisbogen- bzw. parabelartige oder ähnliche Aussparungen auf, die dort aus Gründen der Materialeinsparung bzw. der optimierten Krafteinleitung in die Stützbeine 30 angeordnet sind. Am unteren Ende der Stützbeine 30 sind eckige, insbesondere rechteckige oder auch trapezförmige, Stirnflächen 31 angeordnet, die rohrartig ausgebildet sind, indem sie eine der äußeren Form der Stützbeine 30 ähnliche, rechteckige Öffnung 32 in ihrer Mitte aufweisen.

Im oberen Bereich weist das Übergangsstück 10 eine im gezeigten Ausführungsbeispiel runde Öffnung 33 zur Aufnahme des nicht gezeigten Turms eines Offshore-Bauwerks, wie einer Offshore-Windenergieanlage, auf. Die runde Form der Öffnung 33 ergibt sich durch die üblicherweise runde Form des Turmes einer Offshore-Windenergieanlage. Dieser Turm kann leicht mit der Fügefläche 34 am Rand der Öffnung 33 verschweißt werden. Somit ergibt sich eine gute Krafteinleitung vom Turm über das Übergangsstück 10 und dessen Stützbeine 30, weiter über die Übergangsknoten 23 in die Säulen 12 der Tragstruktur 11. Im Bereich der stärksten Belastung des Übergangsstücks 10 befinden sich die Stützbeine 30, so dass dieser Bereich dadurch besonders verstärkt ist.

Die Schweißnähte 28 sind so angeordnet, dass sie im Bereich der geringsten Belastung des Übergangsstücks 10 jeweils von oben nach unten in einer senkrechten Ebene liegend etwa in der Mitte zwischen zwei benachbarten Stützbeinen 30 verlaufen. Die Schweißnähte 28 verlaufen dabei jeweils im rechten Winkel vom Rand der Öffnung 33 ausgehend bis zum oberen Scheitelpunkt des parabelartigen Ausschnitts. Somit wird jeweils die kürzeste Verbindung zwischen dem Rand der Öffnung 33 und dem Rand des parabelartigen Ausschnitts für die Anordnung der Schweißnaht 28 gewählt und deren Belastung minimiert. Im gezeigten Ausführungsbeispiel mit vier gleichen Übergangsstückteilen 27 und damit vier Schweißnähten 28 verlaufen jeweils zwei gegenüberliegend angeordnete Schweißnähte 28 in einer gemeinsamen senkrechten Ebene. Dementsprechend schneiden sich die beiden Ebenen, in denen jeweils zwei der insgesamt vier Schweißnähte 28 verlaufen, im rechten Winkel zueinander. Die Schnittachse der beiden Ebenen liegt dabei auf der Längsmittelachse 41 des Übergangsstückes 10.

Die Öffnung 33 zur Befestigung des Turmes an dem Übergangsstück 10 weist üblicherweise einen kleineren Querschnitt auf als die von den Stützbeinen 30 aufgespannte Fläche. Die Wandung des Übergangsstückes 10 verläuft dementsprechend von den Stützbeinen 30 aus zur Öffnung 33 hin konvergierend, so dass das Übergangsstück 10 dementsprechend kuppelförmig ausgebildet ist. Da die Schweißnähte 28 dem Verlauf der zusammengesetzten Übergangsstückteile 27 an der Fügestelle 29 folgen, verlaufen sie dementsprechend lediglich in der Draufsicht linear, also in einer senkrechten Ebene, während sie von der Seite betrachtet einem entlang der Wandung des Übergangsstückes 10 gekrümmten Verlauf folgen.

Zum Herstellen der Verbindung des Übergangsstückes 10 mit der Tragstruktur 11 sind am oberen Ende der Säulen 12 als Übergangsknoten 23 ausgebildete Knotenteile angeordnet. Jeder Übergangsknoten 23 weist zwei vorzugsweise parallele Fügeflächen 35, 36 auf. Die Fügeflächen 35 sind korrespondierend zu den Stirnflächen der Rohre 18 rund ausgebildet, während die Fügeflächen 36 zur Verbindung mit den Stirnflächen 31 der Stützbeine 30 des Übergangstücks 10 mit den Stirnflächen 31 korrespondieren, also eckig sind, vorzugsweise die Querschnitte sich gleichen. Darüber hinaus weist der Übergangsknoten 23 zwei schräg abgehende Fügeflächen 37 auf, die zur Verbindung mit Rohren 19 der Streben 13 dienen und in Bezug auf den Querschnitt mit den Rohren 19 korrespondieren.

Durch Verschweißen der Fügefläche 36 des Übergangsknotens 23 mit der Stirnfläche 31 eines der Stützbeine 30 des Übergangsstücks 10 und durch Verschweißen der Fügefläche 35 des Übergangsknotens 23 mit der Stirnfläche eines Rohres 18 wird eine dauerhafte Verbindung zwischen dem Übergangsstück 10 und der Tragstruktur 11 mit Hilfe des Übergangsknotens 23 geschaffen. Darüber hinaus wird die Tragstruktur 11 durch Verschweißen der Fügeflächen 37 mit den Stirnflächen der Rohre 19 der Streben 13 diagonal versteift.

Die Übergangsknoten 23 und die Übergangsstückteile 27 zur Bildung des Übergangsstückes 10 sind aus einem schweißbaren Metall gegossen, sie bestehen nämlich bevorzugt aus Stahlguss. In der gezeigten Ausführungsform sind die Stützbeine 30 direkt als Bestandteile des Übergangsstückteiles 27 an dieses angegossen. Durch das Gießverfahren ergeben sich besondere Vorteile bei der Herstellung in Bezug auf die nahezu beliebige Formgebung. Die anderen Knotenteile 20, 21, 22 können ebenso wie der Übergangsknoten 23 aus einem schweißbaren Metall gegossen sein. Die Übergangsknoten 23, die Knotenteile 20, 21, 22 und/oder die beinartigen Ansätze, also die Stützbeine 30 der Übergangsstückteile 27, sind des Weiteren vorzugsweise hohl ausgebildet. Die Fügeflächen 35, 36 bzw. 37 weisen jeweils zentrale Öffnungen 38, 39 bzw. 40 auf und sind den äußeren Querschnitten der jeweiligen Fügeflächen 35, 36 bzw. 37 entsprechend rund oder eckig ausgebildet. Die Fügeflächen 36 zeigen damit einen rechteckigen, rahmenförmigen Querschnitt wie die Stirnflächen 31 der Stützbeine 30. Der runde, rohrförmige Querschnitt der Fügeflächen 35 bzw. 37 entspricht dem der zugeordneten Rohre 18 bzw. 19.

Die Formgebung des Übergangsstückes 10 ist nicht auf das gezeigte Ausführungsbeispiel beschränkt, sondern es kann stattdessen nahezu beliebig anders ausgebildet sein, beispielsweise mit mehreckiger oder polygonaler Grund- bzw. Querschnittsfläche. Die einzelnen Übergangsstückteile 27 können dabei auch andere Formgebungen als die gezeigte viertelschalenförmige Ausbildung aufweisen, so dass andere als kuppelartige Ausbildungen des Übergangsstückes 10 möglich sind, wie beispielsweise kegel-, pyramiden- oder quaderförmige Körper. Auch können mehr oder weniger als die im Ausführungsbeispiel gezeigten vier Übergangsstückteile 27 zum Übergangsstück 10 zusammengesetzt werden. Ebenso kann die Form der Übergangsknoten 23 den Gegebenheiten angepasst werden, so dass mehr oder weniger seitliche Abgänge mit Fügeflächen 37 vorgesehen sein können. Ebenso können die Fügeflächen 35 und 36 auf andere Weise als oben beschrieben zur Verbindung des Übergangsstückes 10 mit den Säulen 12 angeordnet sein, beispielsweise winklig und/oder versetzt zueinander. Auch können die Übergangsknoten 23 vollständig entfallen, so dass das Übergangsstück 10 direkt mit den Säulen 12 bzw. den zugehörigen Rohren 18 verbunden ist.

### Bezugszeichenliste:

- 10: Übergangsstück
- 11: Tragstruktur
- 12: Säule
- 13: Strebe
- 14: Knotenpunkt
- 15: Knotenpunkt
- 16: Knotenpunkt
- 17: Knotenpunkt
- 18: Rohr
- 19: Rohr
- 20: Knotenteil
- 21: Knotenteil
- 22: Knotenteil
- 23: Übergangsknoten
- 24: Gründungspfahl
- 25: Pfahlhülse
- 26: Platte
- 27: Übergangsstückteil
- 28: Schweißnaht
- 29: Fügestelle
- 30: Stützbein
- 31: Stirnfläche
- 32: Öffnung
- 33: Öffnung
- 34: Fügefläche
- 35: Fügefläche
- 36: Fügefläche
- 37: Fügefläche
- 38: Öffnung
- 39: Öffnung
- 40: Öffnung
- 41: Längsmittelachse

## Patentansprüche

1. Verfahren zur Herstellung einer Gründungsstruktur für Offshore-Bauwerke, insbesondere für Offshore-Windenergieanlagen, mit einer Tragstruktur (11) und einem am oberen Ende derselben angeordneten Übergangsstück (10), **dadurch gekennzeichnet, dass** das Übergangsstück (10) aus mehreren Übergangsstückteilen (27) gebildet wird, und die Übergangsstückteile (27) durch in vertikalen oder nahezu vertikalen Ebenen liegende Schweißnähte (28) miteinander verschweißt werden.

2. Verfahren nach Anspruch 1, **dadurch gekennzeichnet, dass** das Übergangsstück (10) aus mehreren, vorzugsweise gleichen, Übergangsstückteilen (27) gebildet wird.

3. Verfahren nach Anspruch 1 oder 2, **dadurch gekennzeichnet, dass** jedes Übergangsstückteil (27) mit einer Säule (12) der Tragstruktur (11) verbunden wird, vorzugsweise mittels eines Übergangsknotens (23).

4. Verfahren nach einem der vorhergehenden Ansprüche, **dadurch gekennzeichnet, dass** Stirnflächen (31) an den Übergangsstückteilen (27) mit korrespondierenden Fügeflächen (36) der Übergangsknoten (23) verschweißt werden.

5. Gründungsstruktur für Offshore-Bauwerke, insbesondere für Offshore-Windenergieanlagen, mit einer Tragstruktur (11) und einem Übergangsstück (10), das mit einem oberen Endbereich der Tragstruktur (11) verbunden ist, **dadurch gekennzeichnet, dass** das Übergangsstück (10) aus mehreren Übergangsstückteilen (27) gebildet ist, und die Übergangsstückteile (27) durch in vertikalen oder nahezu vertikalen Ebenen liegende Schweißnähte (28) miteinander verbunden sind.

6. Gründungsstruktur nach Anspruch 5, **dadurch gekennzeichnet, dass** das Übergangsstück (10) aus mehreren gleichen Übergangsstückteilen (27), insbesondere vier als Viertelschalen ausgebildeten Übergangsstückteilen (27), gebildet ist.

7. Gründungsstruktur nach Anspruch 5 oder 6, **dadurch gekennzeichnet, dass** jedes Übergangsstückteil (27) eine, vorzugsweise eine am unteren freien Ende eines beinartigen Ansatzes angeordnete, Stirnfläche (31) aufweist.

8. Gründungsstruktur nach einem der Ansprüche 5 bis 7, **dadurch gekennzeichnet, dass** die Tragstruktur mehrere Säulen (12) aufweist, wobei zwischen jeder Säule (12) und dem der jeweiligen Säule (12) zugeordneten Übergangsstückteil (27) des Übergangsstücks (10) jeweils ein Übergangsknoten (23) angeordnet ist.

9. Gründungsstruktur nach Anspruch 8, **dadurch gekennzeichnet, dass** jede Säule (12) über eine vorzugsweise quer zu ihrer Längsmittelachse verlaufende Stirnfläche an ihrem oberen Ende verfügt.

10. Gründungsstruktur nach einem der Ansprüche 5 bis 9, **dadurch gekennzeichnet, dass** der Übergangsknoten (23) mindestens zwei im Wesentlichen gegenüberliegende Fügeflächen (35, 36) aufweist, die vorzugsweise in parallelen Ebenen verlaufen, wobei eine Fügefläche (35) des Übergangsknotens (23) mit einer Stirnfläche einer Säule (12) und die andere Fügefläche (36) des Übergangsknotens (23) mit der Stirnfläche (31) des beinartigen Ansatzes des jeweiligen Übergangsstückteils (27) verbindbar ist.

11. Gründungsstruktur nach einem der Ansprüche 5 bis 10, **dadurch gekennzeichnet, dass** die Übergangsknoten (23) und/oder die Übergangsstückteile (27) aus schweißbarem Metall, insbesondere Stahl, gegossen sind.

12. Gründungsstruktur nach einem der Ansprüche 5 bis 11, **dadurch gekennzeichnet, dass** die Tragstruktur (11) als eine die Säulen (12) aufweisende dreidimensionale Gitterstruktur ausgebildet ist und vorzugsweise das Übergangsstück (10) mit einem Turm beispielsweise einer Offshore-Windenergieanlage verbindbar ist.
